# DEMANDE DE BREVET EUROPEEN

(11) **EP 4 393 757 A1**
(43) Date de publication de la demande: **03.07.2024**
(21) Numéro de dépôt: 23219390.4
(22) Date de dépôt: 21.12.2023
(51) Int. Cl.: B60L 50/51, B60L 15/20, B60L 50/16, B60L 50/13

(54) **ENSEMBLE CONDUCTEUR COMPRENANT UN JEU DE BARRES OMNIBUS ET UN DISPOSITIF DE FIXATION**

(30) Priorité: 31.12.2022 FR 2214738
(71) Demandeur: VALEO EQUIPEMENTS ELECTRIQUES MOTEUR, 94046 Créteil Cedex (FR)
(72) Inventeur: ARMIROLI, Paul, 94046 CRETEIL CEDEX (FR); HAMON, Philippe, 95892 CERGY PONTOISE (FR)
(74) Mandataire: Valeo Powertrain Systems

(57) **Abrégé**

L'invention concerne une architecture de traction (10) pour véhicule automobile comportant:
- au moins une première machine (11.1) électrique de traction présentant une première tension de fonctionnement, la première machine comprenant un premier rotor, le premier rotor étant à aimant permanents, le premier rotor n'étant pas à excitation externe,
- au moins une deuxième machine électrique (11.2) de traction présentant une deuxième tension de fonctionnement, la deuxième machine comprenant un deuxième rotor comprenant un bobinage, le deuxième rotor étant à excitation externe
caractérisée en ce que l'architecture de traction comprend un répartiteur choisissant, pour un couple demandé et une vitesse mesurée, d'alimenter :
- uniquement la première machine (11.1), ou
- uniquement la deuxième machine (11.2), ou
- la première machine (11.1) et la deuxième machine (11.2) conjointement.

## Description

### DOMAINE DE L'INVENTION

La présente invention porte sur une architecture de traction pour véhicule automobile à propulsion électrique et à double machines électriques tournantes.

### ART ANTERIEUR

De façon connue en soi, une chaîne de traction hybride comporte un moteur thermique accouplé à une boîte de vitesses par l'intermédiaire d'un embrayage ainsi qu'au moins une machine électrique réversible implantée sur un des essieux avant ou arrière du véhicule.

Ces machines électriques sont généralement des machines réversibles aptes à fonctionner dans un mode générateur pour recharger une batterie du véhicule ainsi que dans un mode moteur pour assurer un démarrage du moteur thermique, et le cas échéant un roulage électrique. Chaque machine électrique pourra également être utilisée pour fournir de l'énergie à la batterie lors d'une phase de freinage récupératif.

On connaît des architectures de traction mises en oeuvre sur un réseau électrique 48 Volts du véhicule automobile comportant une machine électrique accouplée à la façade accessoire, ou une machine électrique intégrée dans une boîte de vitesses, ou une machine électrique implantée sur le train arrière du véhicule.

On connaît des architectures de traction purement électrique comprenant des machines électriques identiques dont le rotor est à aimant permanents implantées sur l'un des essieux, avant ou arrière, du véhicule.

Une telle machine à aimants permanents présente un bon rendement mais nécessite d'être associée à un module de déconnexion. Lorsque le rotor tourne, il apparait un risque de fournir de l'énergie électrique non désirée à un réseau électrique du véhicule qui alimente la machine électrique à aimants permanents.

Une telle première machine électrique nécessite d'être défluxée dans certaines conditions. Les machines électriques à aimants permanents présentent un rendement dégradé à haute vitesse.

### RÉSUMÉ DE L'INVENTION

L'invention a ainsi pour objet une architecture de traction pour véhicule automobile comportant:
- au moins une première machine électrique de traction présentant une première tension de fonctionnement, la première machine comprenant un premier rotor, le premier rotor étant à aimant permanents, le premier rotor n'étant pas à excitation externe,
- au moins une deuxième machine électrique de traction présentant une deuxième tension de fonctionnement, la deuxième machine comprenant un deuxième rotor comprenant un bobinage, le deuxième rotor étant à excitation externe,

L'architecture de traction est remarquable en ce que qu'elle comprend un répartiteur choisissant, pour un couple demandé et une vitesse mesurée, d'alimenter :
- - uniquement la première machine, ou
- - uniquement la deuxième machine, ou
- - la première machine et la deuxième machine conjointement.

Le répartiteur permet d'utiliser au mieux les deux machines électriques de traction en fonction des conditions de roulage du véhicule. Le répartiteur permet d'alimenter la deuxième machine dans certaines conditions dans lesquelles elle présente de meilleures performances que la première machine.

Selon un aspect de l'invention, la première machine est une machine synchrone à aimants permanents. « Permanent Magnet Synchronous Machine » en anglais ou « PMSM ». La première machine possède une excitation imposée de façon permanente par les aimants. L'absence d'excitation externe signifie que le premier rotor n'est pas excité de manière filaire, qu'il ne présente pas de pièces de frottements, telles que des bagues conductrices.

Selon un aspect de l'invention, la première tension de fonctionnement est comprise entre 48V et 1000V, par exemple égale à 200V, par exemple égale à 400V.

Selon un aspect de l'invention, la première machine présente une puissance comprise entre 15kW et 400kW.

Selon un aspect de l'invention, la deuxième machine est une machine synchrone à excitation externe. « Externally Excited Synchronous Electric Machine » en anglais ou « EESM ».

Selon un aspect de l'invention, la deuxième machine ne nécessite pas d'être associé avec un module de déconnexion. Ne pas alimenter le deuxième rotor suffit à déconnecter électriquement d'une batterie qui alimente ladite deuxième machine. La deuxième machine est également moins chère en coût car elle ne présente pas d'aimants au rotor. L'impact écologique par rapport à une machine à aimants permanents est également moindre. La deuxième machine présente aussi un meilleur rendement qu'une machine à induction qui présente plus de pertes, notamment à haute vitesse et qui nécessite un circuit de refroidissement performant et donc coûteux.

Selon un aspect de l'invention, le deuxième rotor est à excitation séparée, encore appelé rotor bobiné ou rotors à bague. Le deuxième rotor peut comprendre un corps de rotor formé d'un empilement de tôles et comportant une pluralité de dents en saillie radiale. Le bobinage peut être enroulé autour de la pluralité de dents. Le bobinage peut être connecté à une alimentation externe via des bagues collectrices.

Selon un aspect de l'invention, les bagues collectrices correspondent à des dispositifs électromécaniques configurés pour permettre l'échange de puissance électrique entre le bobinage, qui tourne avec le deuxième rotor, et l'alimentation externe, qui est fixe. Les bagues collectrices sont respectivement connectées à une extrémité correspondante du bobinage par l'intermédiaire d'un connecteur électrique.

Selon un aspect de l'invention, la deuxième tension de fonctionnement est comprise entre 48V et 1000V, par exemple égale à 200V, par exemple égale à 400V.

Selon un aspect de l'invention, la deuxième machine présente une puissance comprise entre 15kW et 400kW.

Selon un aspect de l'invention, la deuxième tension est identique à la première tension. La première machine et la deuxième machine peuvent être connectée à une même batterie de traction.

Selon un aspect de l'invention, la deuxième tension est différente de la première tension, notamment inférieure, notamment supérieure. La première machine et la deuxième machine peuvent être connectée à des batteries distinctes. La première machine et la deuxième machine peuvent être connectée à des batteries de traction distinctes.

Selon un aspect de l'invention, le répartiteur peut appartenir à un calculateur moteur de l'architecture de traction.

Selon un aspect de l'invention, le répartiteur prend en compte un rendement énergétique de la première machine, notamment théorique et/ou cartographiée, et un rendement énergétique de la deuxième machine, notamment théorique et/ou cartographiée. Le rendement énergétique est le rapport entre la puissance mécanique restituée sur la puissance électrique fournie.

En fonction des rendements énergiques de la première machine et de la deuxième machine, il est possible de choisir laquelle ou lesquelles alimenter pour obtenir le couple demandé à la vitesse mesurée afin d'avoir un rendement énergétique de l'architecture de traction optimal.

Selon un aspect de l'invention, la première machine présente un meilleur rendement dans une première zone couple/vitesse de rotation que la deuxième machine. Cette première zone est principalement située en deçà d'une première vitesse seuil de rotation. Cette première vitesse seuil est comprise entre 6000 tours/min et 8000 tours/min.

Selon un aspect de l'invention, la deuxième machine présente un meilleur rendement dans une deuxième zone couple/vitesse de rotation que la première machine. Cette deuxième zone est principalement située au-delà de la première vitesse seuil de rotation.

La deuxième machine peut être à privilégier lorsque le couple demandé est relativement bas pour des vitesses de rotation importantes, notamment supérieures à 10000tours/min. De telles conditions peuvent intervenir par exemple sur autoroute.

Selon un aspect de l'invention, le répartiteur choisissant d'alimenter la première machine électrique et la deuxième machine conjointement lorsque le couple demandé est supérieur à un premier couple seuil.

Selon un aspect de l'invention, le premier couple seuil est égale à la plus grande valeur entre le couple associé au meilleur rendement énergétique de la première machine et le couple associé au meilleur rendement énergétique de la deuxième machine pour la vitesse mesurée.

Par exemple, pour une vitesse donnée, le répartiteur peut alimenter la première machine pour obtenir un rendement énergétique optimal de la première machine et compléter avec une alimentation de la deuxième machine afin d'obtenir le couple résiduel.

L'utilisation de la première machine et de la deuxième machine conjointement peut être :
- Nécessaire lorsque le couple demandé est supérieur au couple maximal atteignable par la première machine ou par la deuxième machine.
- Énergétiquement utile mais non nécessaire lorsque le couple demandé est inférieur au couple maximal atteignable par la première machine ou par la deuxième machine

Selon un aspect de l'invention, le premier couple seuil est égal à la plus grande valeur entre le couple maximum de la première machine et le couple maximum de la deuxième machine pour la vitesse mesurée.

Selon un aspect de l'invention, le répartiteur choisit d'alimenter la première machine et la deuxième machine conjointement de façon à minimiser la somme des puissances électriques fournies à la première machine et à la deuxième machine tout en ayant la somme des puissances restituées par la première machine et la deuxième machine égale à la puissance demandée.

Le répartiteur choisit d'alimenter la première machine et la deuxième machine de sorte à maximiser le rendement énergétique global de l'architecture de traction.

Selon un aspect de l'invention, le répartiteur choisit d'alimenter uniquement la première machine électrique, respectivement uniquement la deuxième machine, lorsque pour le couple demandé est inférieur à un deuxième couple seuil et lorsque la différence entre le rendement énergique de la première machine, respectivement de la deuxième machine, et le rendement énergétique de la deuxième machine électrique, respectivement de la première machine, est supérieur à une valeur seuil.

La valeur seuil est positive, notamment supérieure à 2%, notamment supérieure à 3%.

L'invention a également pour objet un ensemble comprenant un essieu avant de véhicule, un essieu arrière de véhicule et l'architecture de traction telle que décrite précédemment.

Selon un aspect de l'invention la première machine est implantée sur l'essieu avant ou sur l'essieu arrière, de préférence l'essieu arrière.

Selon un aspect de l'invention, la deuxième machine étant implantée sur l'essieu avant ou sur l'essieu arrière, de préférence sur l'essieu avant.

Selon un aspect de l'invention, la première machine et la deuxième machine sont implantées sur un même essieu avant ou un même essieu arrière.

Selon un aspect de l'invention, plusieurs premières machines peuvent être prévues. Plusieurs deuxièmes machines peuvent être prévues.

Selon un aspect de l'invention, l'ensemble comprend un premier réducteur entre la première machine et l'essieu avant ou l'essieu arrière sur lequel la première machine est implantée.

Selon un aspect de l'invention, l'ensemble comprend un deuxième réducteur entre la deuxième machine et l'essieu avant ou l'essieu arrière sur lequel la première machine est implantée.

Selon un aspect de l'invention, le premier réducteur et/ou le deuxième réducteur présente un nombre de rapport strictement supérieur à 1.

Le répartiteur peut choisir le rapport à sélectionner du premier réducteur et/ou du deuxième réducteur. Le but de cette sélection étant de pouvoir utiliser la première et/ou la deuxième machine dans des zones couples/vitesses pour lesquelles elles présentent un rendement énergétique optimal.

Selon un aspect de l'invention, l'ensemble comprend un premier module de déconnexion entre la première machine et l'essieu avant ou l'essieu arrière sur lequel la première machine est implantée. La première machine étant à aimants permanents, il est nécessaire de pouvoir la déconnecter des roues dans certaines conditions.

Selon un aspect de l'invention, Selon une réalisation, le module de déconnexion comporte un actionneur à électro-aimant apte à commander l'engagement d'un crabot avec une pièce de liaison reliée.

L'invention a également pour objet un véhicule automobile comprenant l'ensemble décrit précédemment.

L'invention a également pour objet un véhicule automobile comprenant l'architecture de traction décrite précédemment.

### BRÈVE DESCRIPTION DES DESSINS

L'invention sera mieux comprise à la lecture de la description qui suit, et en se référant aux dessins annexés donnés à titre d'exemples non limitatifs, dans lesquels des références identiques sont données à des objets similaires et dans lesquels :
[Fig. 1] est une représentation schématique d'une architecture de traction pour véhicule automobile selon la présente invention;
[Fig. 2] illustre un exemple de cartographie d'une première machine pouvant appartenir à l'architecture de traction de la figure 1 ;
[Fig. 3] illustre un exemple de cartographie d'une deuxième machine pouvant appartenir à l'architecture de traction de la figure 1 ;
[Fig. 4] illustre une cartographie illustrant la différence entre le rendement énergétique de la deuxième machine de la figure 3 et de la première machine de la figure 2;

### DESCRIPTION DÉTAILLÉE

Les éléments identiques, similaires, ou analogues, conservent la même référence d'une figure à l'autre.

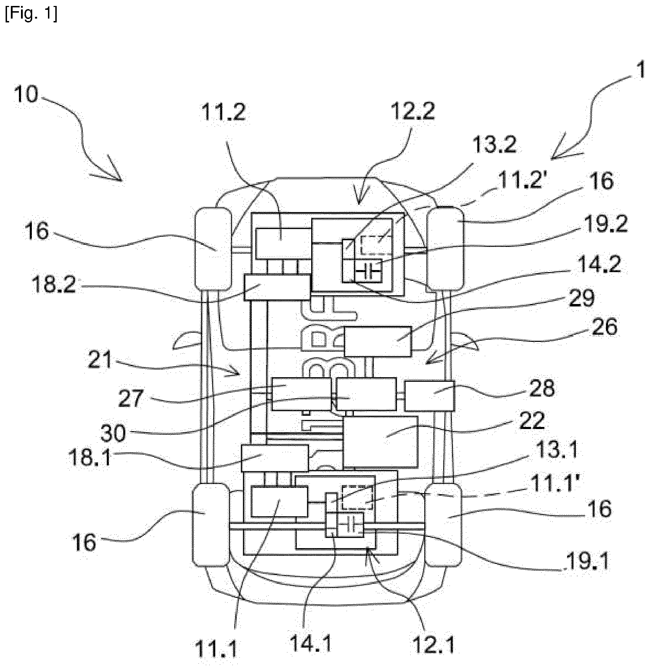

La figure 1 montre un véhicule 1 automobile comportant un ensemble comprenant lui-même une architecture de traction 10. L'architecture de traction 10 pour véhicule automobile comporte une première machine 11.1 électrique de traction et une deuxième machine 11.2 électrique de traction.

Dans l'exemple considéré la première machine 11.1 est de type réversible implantée sur un essieu arrière 12.1 par l'intermédiaire d'un premier réducteur de vitesse 13.1. Le premier réducteur est en prise avec un premier différentiel 14.1 dudit essieu arrière 12.1 muni de roues 16.

Dans l'exemple considéré, la première machine 11.1 est apte à fonctionner dans un mode générateur lors d'une phase de freinage récupératif pour recharger une batterie ainsi que dans un mode moteur pour assurer un roulage électrique du véhicule. La première machine 11.1 est associée à un onduleur de puissance 18.1.

Dans l'exemple considéré, la première machine 11.1 présente une première tension de fonctionnement, comprise entre 48V et 1000V, par exemple égale à 200V, par exemple égale à 400V. La première machine 11.1 peut présenter une puissance comprise entre 15kW et 400kW.

Dans l'exemple considéré, la première machine 11.1 comprend un premier rotor qui est à aimant permanents. Le premier rotor n'étant pas à excitation externe. La première machine 11.1 est une machine synchrone à aimants permanents. « Permanent Magnet Synchronous Machine » en anglais ou « PMSM ». La première machine 11.1 possède une excitation imposée de façon permanente par les aimants.

Dans l'exemple considéré, un premier module de déconnexion 19.1 de la première machine électrique 11.1 est apte à déconnecter la machine électrique 11.1 par rapport aux roues 16. La première machine 11.1 étant à aimants permanents, il est nécessaire de pouvoir la déconnecter des roues 16 dans certaines conditions. Le premier module de déconnexion 19.1 peut comporter un actionneur à électro-aimant apte à commander l'engagement d'un crabot avec une pièce de liaison reliée. Cela permet de supprimer les pertes à haute vitesse lorsque la machine électrique 11.1 n'est pas utilisée.

Dans l'exemple considéré, la deuxième machine 11.2 électrique tournante de type réversible est implantée sur un essieu avant 12.2 par l'intermédiaire d'un deuxième réducteur de vitesse 13.2 en prise avec un différentiel 14.2 dudit essieu avant 12.2 muni de roues 16.

Dans l'exemple considéré, la deuxième machine 11.2 est apte à fonctionner dans un mode générateur lors d'une phase de freinage récupératif pour recharger une batterie ainsi que dans un mode moteur pour assurer un roulage électrique du véhicule. La machine électrique 11.2 est associée à un onduleur de puissance 18.2.

Dans l'exemple considéré, la deuxième machine 11.2 présente une deuxième tension de fonctionnement comprise entre 48V et 1000V, par exemple égale à 200V, par exemple égale à 400V. Ici la première tension de fonctionnement et la deuxième tension de fonctionnement sont égales.

Dans l'exemple considéré, la deuxième machine 11.2 peut présenter une puissance comprise entre 15kW et 400kW, par exemple 200kW.

Dans l'exemple considéré, la première machine 11.1 et la deuxième machine 11.2 ont la même puissance, par exemple 200kW.

Dans l'exemple considéré, la deuxième machine 11.2 comprend un deuxième rotor comprenant un bobinage, le deuxième rotor étant à excitation externe. La deuxième machine est une machine synchrone à excitation externe. « Externally Excited Synchronous Electric Machine » en anglais ou « EESM ».

Dans l'exemple considéré et même si cela n'est pas nécessaire car il suffit de ne pas alimenter le deuxième rotor pour déconnecter la deuxième machine électrique 11.2, un deuxième module de déconnexion 19.2 de la machine électrique 11.2 est apte à déconnecter la machine électrique 11.2 par rapport aux roues 16.

Dans l'exemple considéré, l'ensemble comprend l'architecture de traction 10, l'essieu arrière 12.1, l'essieu avant 12.2, le premier réducteur 13.1, le deuxième réducteur 13.2, le premier module de déconnexion 19.1 et le deuxième module de déconnexion 19.2

Dans l'exemple considéré, la première machine électrique 11.1 et la deuxième machine électrique 11.2 sont connectées, via leur onduleur 18.1, 18.2 correspondant, à un premier réseau électrique 21 sur lequel est également connectée une batterie de traction 22. Ce réseau électrique 21 présente une tension de fonctionnement comprise entre 48V et 1000V. Avantageusement, la tension de fonctionnement du réseau électrique 21 est de 300V. D'autres charges électriques pourront également être connectées sur le réseau électrique 21.

Dans l'exemple considéré, le réseau électrique 21 est interfacé avec un deuxième réseau électrique 26 basse tension par l'intermédiaire d'un convertisseur de puissance continu/continu 27. Un calculateur moteur 28 ainsi que des consommateurs électriques 29 du véhicule de type éclairage, actionneurs de vitres ou de sièges sont connectés au réseau électrique 26. Ce réseau électrique 26 appelé "réseau de bord" est associé à une batterie 30 présentant une tension de fonctionnement inférieure à celle du premier réseau électrique 21. La tension de fonctionnement du réseau électrique 26 est de préférence de l'ordre de 12 Volts.

Dans une variante de réalisation, il est possible d'implanter une machine supplémentaire 11.1', 11.2' sur l'essieu arrière 12.1 et/ou sur l'essieu avant 12.2, afin d'augmenter la puissance et le couple disponible en roulage électrique. Ces machines supplémentaires sont du même type que celles déjà implantée sur l'essieu considéré.

Dans l'exemple considéré, l'architecture de traction 10 comprend un répartiteur choisissant, pour un couple demandé et une vitesse mesurée, d'alimenter :
- - uniquement la première machine 11.1, ou
- - uniquement la deuxième machine 11.2, ou
- - la première machine 11.1 et la deuxième machine11.2 conjointement.

Dans l'exemple configuré, la première machine électrique tournante 11.1 et la deuxième machine électrique tournante 11.2 sont configurées pour assurer seules ou en combinaison la traction du véhicule automobile. Le répartiteur permet d'utiliser au mieux les deux machines électriques de traction en fonction des conditions de roulage du véhicule.

Par exemple dans l'exemple considéré, le répartiteur permet d'alimenter la deuxième machine 11.2 dans certaines conditions dans lesquelles elle présente de meilleures performances que la première machine 11.1. En particulier lorsque la deuxième machine 11.2 est alimentée la première machine 11.1 est déconnectée pour minimiser les pertes.

Dans l'exemple considéré, le répartiteur appartient au calculateur moteur 28 de l'architecture de traction 10.

Dans l'exemple considéré, le répartiteur prend en compte un rendement énergétique théorique et cartographiée de la première machine 11.1 et un rendement énergétique théorique et cartographiée de la deuxième machine 11.2. Le rendement énergétique, exprimé en pourcentage, est le rapport entre la puissance mécanique restituée sur la puissance électrique fournie.

En fonction des rendements énergiques de la première machine et de la deuxième machine, il est possible de choisir laquelle ou lesquelles alimenter pour obtenir le couple demandé à la vitesse mesurée afin d'avoir un rendement énergétique de l'architecture de traction optimal.

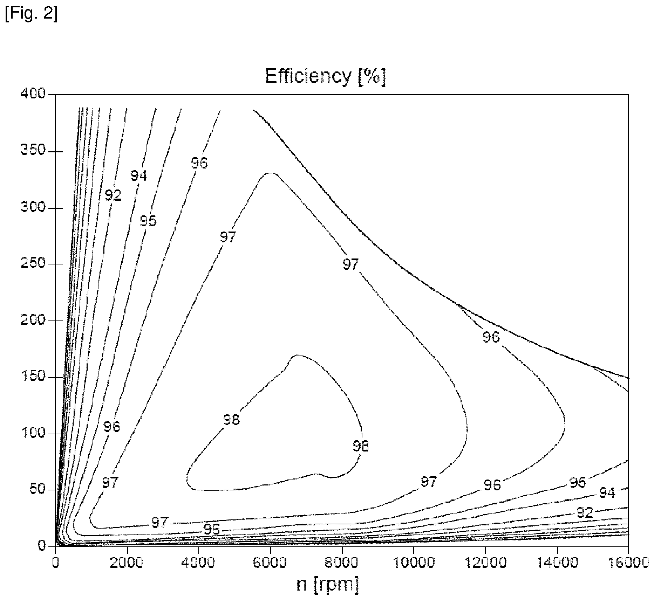

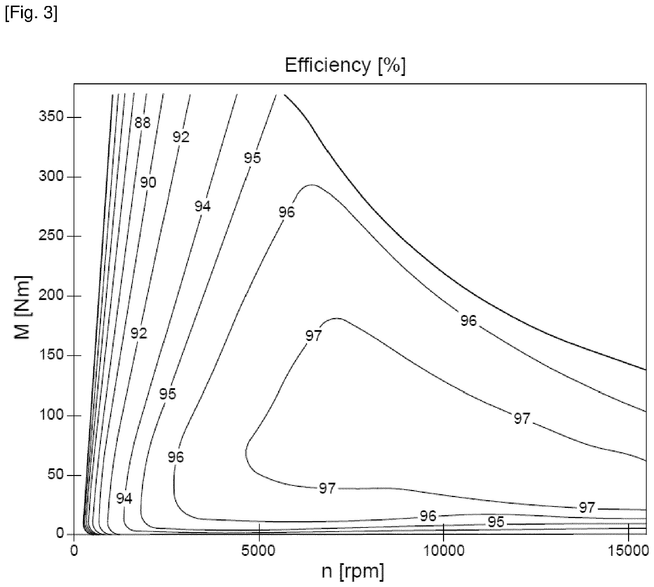

La figure 2 présente une cartographie du rendement énergétique théorique de la première machine 11.1 et la figure 3 présente une cartographie du rendement énergétique théorique de la deuxième machine 11.2.

Sur les figures 2 et 3, les pertes mécaniques ne sont pas considérées.

Sur les figures 2 et 3, les lignes de niveau représentent les valeurs entières du rendement énergétique. Les zones entre deux lignes de niveau successives sont donc comprises entre la valeur de la ligne de niveau basse et la ligne de niveau haute.

Sur les figures 2 et 3, la vitesse de la machine concernée est en abscisse tandis que le couple de la machine concernée est en ordonnée. À chaque couple vitesse/couple correspond donc un rendement énergétique.

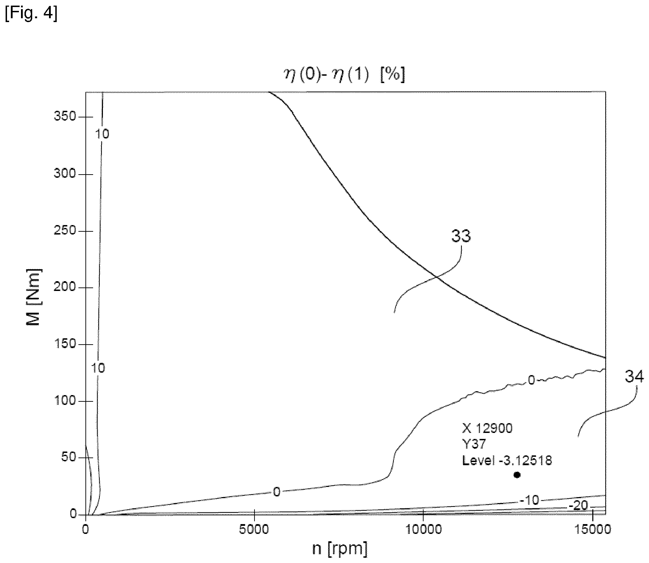

La figure 4 présente la différence entre les rendements de la première machine 11.1 et de la deuxième machine 11.2 en fonction de la vitesse des machines et du couple restitué.

Les figures 2 à 4 nous indiquent que la première machine 11.1 présente un meilleur rendement dans une première zone couple/vitesse 33 que la deuxième machine 11.2. Cette première zone est principalement située en deçà d'une première vitesse seuil de rotation. Cette première vitesse seuil est ici entre 6000 tours/min et 8000 tours/min. En deçà de cette première vitesse seuil et pour un couple supérieur à 30Nm, la première machine 11.1 présente un meilleur rendement que la deuxième machine 11.2.

Les figures 2 à 4 nous indiquent que la deuxième machine 11.2 présente un meilleur rendement dans une deuxième zone couple/vitesse 34 que la première machine 11.1. Cette deuxième zone est principalement située au-delà de la première vitesse seuil de rotation et pour un couple inférieur à 130Nm.

Les figure 2 à 4, nous indique que la deuxième machine 11.2 est à privilégier lorsque le couple demandé est relativement bas, notamment inférieure à 130Nm pour des vitesses de rotation importantes, notamment supérieures à 10000tours/min. De telles conditions peuvent intervenir par exemple sur autoroute.

A la figure 4, les coordonnées couple/vitesse misent en avant, montre que la deuxième machine 11.2 présente un meilleur rendement, d'environ 3%, dans des conditions qui peuvent être celles d'un véhicule sur autoroute en régime établi.

Dans l'exemple considéré, le répartiteur choisit d'alimenter la première machine électrique 11.1 et la deuxième machine 11.2 conjointement lorsque le couple demandé est supérieur à un premier couple seuil.

Dans l'exemple considéré, le premier couple seuil est égale à la plus grande valeur entre le couple associé au meilleur rendement énergétique de la première machine et le couple associé au meilleur rendement énergétique de la deuxième machine pour la vitesse mesurée.

Dans l'exemple considéré, pour une vitesse donnée, le répartiteur peut alimenter la première machine 11.1 pour obtenir un rendement énergétique optimal de la première machine et compléter avec une alimentation de la deuxième machine 11.2 afin d'obtenir le couple résiduel.

Dans l'exemple considéré, l'utilisation de la première machine et de la deuxième machine conjointement peut être :
- Nécessaire lorsque le couple demandé est supérieur au couple maximal atteignable par la première machine 11.1 ou par la deuxième machine11.2.
- Énergétiquement utile mais non nécessaire lorsque le couple demandé est inférieur au couple maximal atteignable par la première machine 11.1 ou par la deuxième machine 11.2.

Dans l'exemple considéré, le répartiteur choisit d'alimenter la première machine 11.1 et la deuxième machine 11.2 conjointement de façon à minimiser la somme des puissances électriques fournies à la première machine 11.1 et à la deuxième machine 11.2 tout en ayant la somme des puissances restituées par la première machine et la deuxième machine égal à la puissance demandée.

Le répartiteur choisit d'alimenter la première machine et la deuxième machine de sorte à maximiser le rendement énergétique global de l'architecture de traction. Pour cela le répartiteur utilise les cartographies de la première machine 11.1 et de la deuxième machine 11.2.

Dans l'exemple considéré, le répartiteur choisit d'alimenter uniquement la première machine électrique 11.1, respectivement uniquement la deuxième machine 11.2, lorsque pour le couple demandé est inférieur à une deuxième valeur seuil et lorsque la différence entre le rendement énergique de la première machine, respectivement de la deuxième machine, et le rendement énergétique de la deuxième machine électrique, respectivement de la première machine, est supérieur à une valeur seuil.

Dans l'exemple considéré, la valeur seuil est positive, notamment supérieure à 2%.

Dans l'exemple considéré, Le répartiteur peut choisir le rapport à sélectionner du premier réducteur 13.1 et/ou du deuxième réducteur 13.2. Le but de cette sélection étant de pouvoir utiliser la première et/ou la deuxième machine dans des zones couples/vitesses pour lesquelles elles présentent un rendement énergétique optimal.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

## Revendications

1. Architecture de traction (10) pour véhicule automobile comportant:
- au moins une première machine (11.1) électrique de traction présentant une première tension de fonctionnement, la première machine comprenant un premier rotor, le premier rotor étant à aimant permanents, le premier rotor n'étant pas à excitation externe,
- au moins une deuxième machine électrique (11.2) de traction présentant une deuxième tension de fonctionnement, la deuxième machine comprenant un deuxième rotor comprenant un bobinage, le deuxième rotor étant à excitation externe
**caractérisée en ce que** l'architecture de traction comprend un répartiteur choisissant, pour un couple demandé et une vitesse mesurée, d'alimenter :
- uniquement la première machine (11.1), ou
- uniquement la deuxième machine (11.2), ou
- la première machine (11.1) et la deuxième machine (11.2) conjointement.

2. Architecture de traction (10) selon la revendication 1, le répartiteur prend en compte un rendement énergétique de la première machine (11.1), notamment théorique et/ou cartographiée, et un rendement énergétique de la deuxième machine (11.2), notamment théorique et/ou cartographiée, le rendement énergétique étant le rapport entre la puissance mécanique restituée sur la puissance électrique fournie.

3. Architecture de traction (10) selon l'une quelconque des revendications, le répartiteur choisissant d'alimenter la première machine électrique (11.1) et la deuxième machine (11.2) conjointement lorsque le couple demandé est supérieur à une première valeur seuil.

4. Architecture de traction (10) selon la revendication précédente, le répartiteur choisissant d'alimenter la première machine (11.1) et la deuxième machine (11.2) de façon à minimiser la somme des puissances électriques fournies à la première machine (11.1) et à la deuxième machine (11.1) tout en ayant la somme des puissances restituées par la première machine (11.1) et la deuxième machine (11.2) égale à la puissance demandée.

5. Architecture de traction (10) selon l'une quelconque des revendications, le répartiteur choisissant d'alimenter uniquement la première machine électrique (11.1), respectivement uniquement la deuxième machine (11.2), lorsque pour le couple demandé est inférieur à un deuxième couple seuil et lorsque la différence entre le rendement énergétique de la première machine (11.1) , respectivement de la deuxième machine (11.2), et le rendement énergétique de la deuxième machine électrique (11.2), respectivement de la première machine (11.1), est supérieure à une valeur seuil, par exemple 0%, par exemple 2%, par exemple 3%.

6. Ensemble comprenant un essieu avant (12.2) de véhicule, un essieu arrière (12.1) de véhicule et l'architecture de traction (10) selon l'une des revendications précédentes, la première machine (11.1) étant implantée sur l'essieu avant (12.2) ou sur l'essieu arrière (12.1), de préférence l'essieu arrière (12.1), et la deuxième machine (11.2) étant implantée sur l'essieu avant (12.2) ou sur l'essieu arrière (12.1), de préférence sur l'essieu avant (12.2).

7. Ensemble selon la revendication précédente, **caractérisé en ce que** l'ensemble comprend un premier réducteur (13.1) entre la première machine (11.1) et l'essieu avant (12.2) ou l'essieu arrière (12.1) sur lequel la première machine est implantée, et **en ce que** l'ensemble comprend un deuxième réducteur (13.2) entre la deuxième machine (12.2) et l'essieu avant (12.2) ou l'essieu arrière (12.1) sur lequel la première machine est implantée.

8. Ensemble selon l'une la revendication précédente, **caractérisé en ce que** le premier réducteur (13.1) et/ou le deuxième réducteur (13.2) présente un nombre de rapport strictement supérieur à 1, le répartiteur choisissant le rapport à sélectionner du premier réducteur (13.1) et/ou du deuxième réducteur (13.2).

9. Ensemble selon l'une quelconque des revendications 6 à 8, **caractérisé en ce que** l'ensemble comprend un premier module de déconnexion (19.1) entre la première machine (11.1) et l'essieu avant (12.1) ou l'essieu arrière (12.1) sur lequel la première machine est implantée.

10. Véhicule (1) automobile comprenant l'ensemble selon l'une quelconque des revendications 6 à 9.
